## Europäisches Patentamt
## European Patent Office
## Office européen des brevets

(19)

(11) Veröffentlichungsnummer: **0 041 200**
**B1**

(12) **EUROPÄISCHE PATENTSCHRIFT**

(45) Veröffentlichungstag der Patentschrift:
31.08.83

(51) Int. Cl.³: **C 09 D 3/49**, C 08 L 63/00,
C 08 L 61/00

(21) Anmeldenummer: 81103946.0

(22) Anmeldetag: 22.05.81

(54) Beschichtungsmittel auf der Basis von Epoxidharzen.

(30) Priorität: 03.06.80 DE 3020986

(43) Veröffentlichungstag der Anmeldung:
09.12.81 Patentblatt 81/49

(45) Bekanntmachung des Hinweises auf die Patenterteilung:
31.08.83 Patentblatt 83/35

(84) Benannte Vertragsstaaten:
AT BE CH DE FR GB IT LI LU NL

(56) Entgegenhaltungen:
DD-A-76 052
DD-A-86 503

PATENT ABSTRACTS OF JAPAN, unexamined applications, C Section, Vol. 1, No. 4, March 10, 1977 THE PATENT OFFICE JAPANESE GOVERNMENT, page 565 C 76

ULLMANNS ENCYKLOPÄDIE DER TECHNISCHEN CHEMIE, 4. Auflage, Band 12, 1976, VERLAG CHEMIE, Weinheim, New York

(73) Patentinhaber: Lechler Chemie GmbH, Kornwestheimer Strasse 107 Postfach 400 560, D-7000 Stuttgart 40 (DE)

(72) Erfinder: Öchsner, Waldemar, Dr. Dipl.-Chem., Königsallee 80, D-7140 Ludwigsburg (DE)
Erfinder: Schugt, Manfred, Stauffenbergstrasse 24, D-7141 Ludwigsburg (DE)
Erfinder: Wagner, Friedrich, Untere Burghalde 90, D-7250 Leonberg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschichtungsmittel auf der Basis von Epoxidharzen

Bei Raumtemperatur härtende Zweikomponenten-Epoxidharz-Systeme bestehen üblicherweise aus Epoxidharzen auf der Basis von Bisphenol A und/oder Bisphenol F, die mit Polyaminen, Polyaminaddukten oder Polyaminoamiden vernetzt werden. Die Reaktion kann gegebenenfalls durch Mitverwendung von phenolischen Verbindungen beschleunigt werden.

Beschichtungsstoffe dieser Art zeichnen sich durch sehr gute mechanische Eigenschaften und chemische Beständigkeit aus. Ihre Verwendungsmöglichkeit ist trotz dieser guten Eigenschaften begrenzt, da ihre Witterungsbeständigkeit nicht befriedigend und ihr Preis relativ hoch ist. Die Filme werden bei Bewitterung oberflächlich abgebaut, was sich unter anderem in einem starken Kreiden äussert. Der oberflächliche Filmabbau führt dazu, dass Folgeanstriche auf Epoxidharzbasis auf bewitterten Epoxidharzfilmen schlecht haften.

Es ist bekannt, dass gewisse Eigenschaften und die Wirtschaftlichkeit von Zweikomponenten-Epoxidharz-Systemen durch Verschneiden mit Weichmachern von Harzen, wie z.B. Cumaron-Indenharzen, oder mit Steinkohlenteeren bzw. Steinkohlenteerpechen günstig beeinflusst werden können. Durch diese Massnahmen werden zwar die Wirtschaftlichkeit und unter Umständen auch andere Eigenschaften verbessert, der Mangel der nicht befriedigenden Wetterbeständigkeit aber nicht behoben, da die seither vorgeschlagenen und verwendeten Verschnittmittel für Epoxidharze bei Bewitterung selbst mehr oder weniger stark abgebaut werden und/oder mit Epoxidharzen nicht homogen verträglich sind.

Es wurde gefunden, dass der oberflächliche Filmabbau bei Bewitterung von Beschichtungsstoffen auf der Basis von Epoxidharzen wesentlich vermindert und die Überstreichbarkeit wesentlich verbessert werden kann, wenn man die üblichen Zweikomponenten-Epoxidharz-Systeme mit Ketonharzen verschneidet, die mit Epoxidharzen verträglich sind. Der Anteil an Ketonharzen im Bindemittel (Epoxidharz + Härter + Ketonharz) kann etwa 20 bis 70 Gew.-% betragen. Bei einem Ketonharzanteil von 40 bis 60% erhält man die günstigsten Eigenschaften.

Gegenstand der Erfindung sind daher Beschichtungsmittel aus Epoxidharzen und Härtern auf Basis von Bisphenol A und/oder Bisphenol F-Epoxidharzen und Polyaminen, Polyaminoaddukten und/oder Polyaminoamiden, die dadurch gekennzeichnet sind, dass sie zusätzlich Ketonharze enthalten.

Der Ketonharzanteil im Bindemittel beträgt dabei 20 bis 70 Gew.-%, vorzugsweise 40 bis 60 Gew.-%.

Die chemische Beständigkeit, die mechanischen Eigenschaften und die Härtung sind in diesem Bereich nicht beeinträchtigt, dagegen ist die Wetterbeständigkeit und die Überstreichbarkeit bewitterter Filme wesentlich verbessert, da der oberflächliche Filmabbau üblicher Zweikomponenten-Epoxidharz-Systeme durch den Ketonharzzusatz vermindert wird.

Der erfindungsgemässe Zusatz von Ketonharzen zu Zweikomponenten-Epoxidharz-Systemen ist möglich bei Systemen, die als Epoxidharz Kondensationsprodukte aus Bisphenol A und/oder Bisphenol F enthalten und die mit Polyaminen, Polyaminoaddukten oder Polyaminoamiden vernetzt werden. Die Mitverwendung von phenolischen Beschleunigern ist vorteilhaft. Weiterhin können gegebenenfalls die auf diesem Gebiet üblichen Füllstoffe, Farbstoffe, Pigmente und Lösungsmittel mitverwendet werden. Geeignete Ketonharze sind solche auf Cyclohexanon/Formaldehyd- und insbesondere auf Cyclohexanon-Basis.

Besonders vorteilhaft ist die Mitverwendung von Ketonharzen bei flüssigen Epoxidharzen. Man kommt dabei zu Beschichtungsstoffen, die neben ihrer sehr guten Wetterbeständigkeit und Überstreichbarkeit wegen ihres hohen Festkörpergehalts sehr wirtschaftlich und wegen ihres geringen Lösungsmittelgehalts umweltfreundlich sind.

Als Beispiele für die erfindungsgemässen Beschichtungsmittel seien die folgenden Formulierungen genannt:

Beispiel 1
Harzkomponente
29 Gew.-% flüssiges Epoxidharz auf Bisphenol A-Basis (Epoxid-Äquivalentmasse ca. 200)
13 Gew.-% Ketonharz (Kondensationsprodukt aus Cyclohexanon und Formaldehyd)
2 Gew.-% Äthylglykol
6 Gew.-% Xylol

Härterkomponente
23 Gew.-% Polyaminoamid auf Basis dimerer Fettsäure und Triäthylentetramin (Aminzahl ca. 240)
15 Gew.-% Nonylphenol
2 Gew.-% Äthylglykol
10 Gew.-% Shellsol® A

Fertigmaterial
50 Gew.-% Harzkomponente
50 Gew.-% Härterkomponente

Beispiel 2
Harzkomponente
14 Gew.-% flüssiges Epoxidharz auf Bisphenol A-Basis (Epoxid-Äquivalentmasse ca. 200)
42 Gew.-% Ketonharz (Kondensationsprodukt aus Cyclohexanon)
24 Gew.-% Xylol

Härterkomponente
5 Gew.-% cycloaliphatisches Polyamin (3,3'-Dimethyl-4,4'-diamino-dicyclohexyl-methan, Aminzahl ca. 470)
4 Gew.-% Kresol
11 Gew.-% Xylol

Fertigmaterial
80 Gew.-% Harzkomponente
20 Gew.-% Härterkomponente

Ein Vergleich der erfindungsgemässen Beschichtungsmittel gegenüber Epoxidharzen ohne Ketonharzanteil zeigte folgende Ergebnisse:

a) Wetterbeständigkeit
Es wurden Stahlplatten gestrichen und nach Trocknung bei Normalklima 5 Monate freibewittert. Zum Vergleich wurden mitgeprüft: gleichartig zusammengesetzte reine Epoxidharzanstriche (ohne Ketonharz), mit Cumaron-Indenharzen verschnittene Epoxidharzanstriche und mit Steinkohlenteerpech verschnittene Epoxidharzanstriche.
Die Prüfungen haben ergeben, dass die erfindungsgemässen Epoxidharz-Ketonharz-Kombinationen nach Freibewitterung wesentlich weniger abkreiden als alle zum Vergleich mitgeprüften Systeme.

b) Überstreichbarkeit
Die Epoxidharz-Ketonharz-Kombinationen und die unter a) aufgeführten Systeme (rein Epoxidharz, Epoxidharz + Cumaron-Indenharz, Epoxidharz + Steinkohlenteerpech) wurden nach dreimonatiger Freibewitterung mit sich selbst überstrichen. Nach weiterer einmonatiger Freibewitterung wurde die Zwischenhaftung der letzten Anstriche auf den bewitterten Anstrichen geprüft. Dabei hat sich gezeigt, dass bei allen erfindungsgemässen Epoxidharz-Ketonharz-Kombinationen die Folgeanstriche auf den vorhergegangenen bewitterten Anstrichen hafteten, während bei allen anderen zum Vergleich mitgeprüften Systemen bei dieser Prüfung keine Zwischenhaftung festgestellt werden konnte.

**Patentansprüche**

1. Beschichtungsmittel aus Epoxidharzen und Härtern auf Basis von Bisphenol A und/oder Bisphenol F-Epoxidharzen und Polyaminen, Polyaminoaddukten und/oder Polyaminoamiden, dadurch gekennzeichnet, dass sie zusätzlich Ketonharze enthalten.
2. Beschichtungsmittel nach Anspruch 1, dadurch gekennzeichnet, dass der Anteil an Ketonharz im Bindemittel 20 bis 70 Gew.-% beträgt.
3. Beschichtungsmittel nach Anspruch 2, dadurch gekennzeichnet, dass der Anteil an Ketonharz im Bindemittel 40 bis 60 Gew.-% beträgt.

**Revendications**

1. Produits d'enduction constitués de résines époxydes et de durcisseur, à base de résines époxydes dérivant du bisphénol A et/ou du bisphénol F et de polyamines, de produits d'addition polyaminés et/ou de poylaminoamides, produits d'enduction caractérisés en ce qu'ils contiennent, en outre, des résines cétoniques.
2. Produits d'enduction selon la revendication 1, caractérisés en ce que la quantité de résine cétonique dans le liant est comprise entre 20 et 70% en poids.
3. Produits d'enduction selon la revendication 2, caractérisés en ce que la quantité de résine cétonique dans le liant est comprise entre 40 et 60% en poids.

**Claims**

1. Coating agents comprising epoxy resins and hardeners based on bisphenol A and/or bisphenol F epoxy resins and polyamines, polyamino adducts and/or polyaminoamides, characterised in that they additionally contain ketone resins.
2. Coating agents according to claim 1, characterised in that the amount of ketone resin in the binder is from 20 to 70% by weight.
3. Coating agents according to claim 2, characterised in that the amount of ketone resin in the binder is from 40 to 60% by weight.